# EUROPEAN PATENT APPLICATION

(11) **EP 1 345 422 A1**
(43) Date of publication of application: **17.09.2003**
(21) Application number: 02028973.2
(22) Date of filing: 24.12.2002
(51) Int. Cl.: H04N 5/232, G03B 17/00, H04N 1/21

(54) **A device and a method for determining the orientation of an image capture apparatus**

(30) Priority: 14.03.2002 US 364887 P
(71) Applicant: Creo IL. Ltd., 46103 Herzlia Pituah (IL)
(72) Inventor: Kalinski, Dov, 45219 Hod HaSharon (IL); Seidner, Daniel, 46275 Herzlia (IL); Barkan, Stanley, 30825 D.N. Hof HaCarmel (IL)
(74) Representative: Hofmann, Harald

(57) **Abstract**

A device for determining an orientation of an image capture apparatus operable to capture at least one image. The device comprising an arrangement of sensors and a control unit, communicating with the arrangement of sensors. The arrangement of sensors being designed and configured to generate electrical signals characterizing a particular orientation of the image capture apparatus, at a time of image capture, and to transmit the signals from the arrangement of sensors to the control unit, thereby providing an indication of the orientation of the image capture apparatus at the time of image capture.

## Description

### Field of the Invention

The present invention relates to a device and a method of determining and recording an orientation and more particularly but not exclusively to a device and a method for determining and recording an orientation of an image capture apparatus, *e.g.*, a camera at the time of capture of a given image.

### Background of the Invention

Digital cameras are being developed today to allow an image to be captured, digitized, stored, and reproduced using conventional printers and or displays coupled to an external system, such as a personal computer. Digital cameras are manufactured with a display unit capable of electronically displaying an image of a scene in a real time manner in an image capturing mode. In addition, many digital cameras include a monitor for electronically displaying the image at the time of or after capturing the image.

Also commercially available are cameras having an exchangeable camera back that allows a user to select between taking a picture using conventional photographic film (conventional photography) and attaching a camera back for taking a picture using an imaging device (digital photography). For example, in a medium format camera, a back cover which closes over the photographic film is detachable, and an imaging device camera back may be attached instead of the back cover so that digital photography can be performed.

Prior to photographing an object, the photographer often rotates the camera to a desired orientation. For example, the photographer may choose to photograph a wide scene in a so called "landscape-orientation" and subsequently to photograph an individual in a so called "portrait-orientation". However, in state-of-the-art cameras (either digital cameras or cameras having digital camera backs), the application is not aware of the orientation of the camera while photographing.

Thus, when a sequence of "portrait" and "landscape" oriented images are printed and/or viewed side-by-side in a browsing application such as a display of a camera back or a display of an external system, the orientation of some images turns out to be incorrect. In some computer applications the user may manually select, for each incorrectly oriented image, a series of rotations so that the image is viewed in its normal orientation. However, for a large number of images this procedure may be tedious and time-consuming. It is appreciated that images should be displayed in a correct orientation for normal viewing, especially in cases when the display cannot be easily rotated.

There is thus a widely recognized need for, and it would be highly advantageous to have, a device and a method of automatically determining an orientation of an image capture apparatus without having to instruct the software application to rotate the image.

### Summary of the Invention

According to one aspect of the present invention there is provided a device for determining an orientation of an image capture apparatus operable to capture at least one image, the device comprising an arrangement of sensors and a control unit communicating with the arrangement of sensors, the arrangement of sensors being designed and configured to generate electrical signals characterizing a particular orientation of the image capture apparatus, at a time of image capture, and to transmit the signals from the arrangement of sensors to the control unit, thereby providing an indication of the orientation of the image capture apparatus at the time of image capture.

According to further features in preferred embodiments of the invention described below, the device further comprises memory media for storing an image and the orientation in a retrievable and displayable format, thereby to provide a recorded image and a recorded orientation information, the recorded orientation information being associated with the recorded image.

According to still further features in the described preferred embodiments the control unit communicates with the image capture apparatus.

According to another aspect of the present invention there is provided an image capture apparatus operable to capture at least one image, and having a device for determining an orientation of the image capture apparatus, the device comprising an arrangement of sensors and a control unit communicating with the arrangement of sensors, the arrangement of sensors being designed and configured to generate electrical signals characterizing a particular orientation of the image capture apparatus, at a time of image capture, and to transmit the signals from the arrangement of sensors to the control unit, thereby providing an indication of the orientation of the image capture apparatus at the time of image capture.

According to further features in preferred embodiments of the invention described below, the image capture apparatus further comprises memory media for storing an image and the orientation in a retrievable and displayable format, thereby to provide a recorded image and a recorded orientation information, the recorded orientation information being associated with the recorded image.

According to still further features in the described preferred embodiments the arrangement of sensors are parameterized by a plurality of predetermined and different states, each state of the plurality of states represents one orientation of the image capture apparatus.

According to still further features in the described preferred embodiments the image capture apparatus further comprises a processor operable to select a capture mode of an image.

According to still further features in the described preferred embodiments the control unit communicates with the processor.

According to still further features in the described preferred embodiments the image capture apparatus further comprises a display.

According to still further features in the described preferred embodiments the processor is operable to project the image on the display in accordance with the capture mode.

According to still further features in the described preferred embodiments the image capture apparatus further comprises a memory for storing the capture mode.

According to yet another aspect of the present invention there is provided a method of determining an orientation of an image capture apparatus operable to capture at least one image, the method comprising generating electrical signals characterizing a particular orientation of the image capture apparatus, at a time of image capture, and transmitting the electrical signals to a control unit, thereby providing an indication of the orientation of the image capture apparatus at the time of image capture.

According to further features in preferred embodiments of the invention described below, the electrical signals are generated by an arrangement of sensors.

According to still further features in the described preferred embodiments the method further comprises storing an image and the orientation in a retrievable and displayable format, thereby providing a recorded image and a recorded orientation information, the recorded orientation information being associated with the recorded image.

According to still further features in the described preferred embodiments the arrangement of sensors comprises a first sensor and a second sensor, engaging a single plane in a substantially different orientation.

According to still further features in the described preferred embodiments the method further comprises selecting a capture mode of an image.

According to still further features in the described preferred embodiments the method further comprises projecting the image on a display in accordance with the capture mode.

According to still further features in the described preferred embodiments the method further comprises storing the capture mode in a memory.

According to still another aspect of the present invention there is provided a method of manufacturing a device for determining an orientation of an image capture apparatus operable to capture at least one image, the method comprising: providing an arrangement of sensors; providing a control unit; providing a first communication channel between the arrangement of sensors and the control unit; and connecting the control unit and the arrangement of sensors to the image capture apparatus so that electrical signals characterizing a particular orientation of the image capture apparatus, at a time of image capture, are transmitted via the communication channel from the arrangement of sensors to the control unit, for association with a corresponding captured image.

According further features in preferred embodiments of the invention described below, the method further comprises providing memory media capable of storing an image and the orientation in a retrievable and displayable format.

According to still further features in the described preferred embodiments the image capture apparatus is selected from a group consisting of a digital camera, a video camera, a digital video camera and a camera having a digital camera back.

According to still further features in the described preferred embodiments the method further comprises parameterizing the arrangement of sensors by a plurality of predetermined and different states, each state of the plurality of states represents one orientation of the image capture apparatus.

According to still further features in the described preferred embodiments the arrangement of sensors is operable to sense a direction of at least one reference field relative to the image capture apparatus in a respective orientation of the image capture apparatus, the direction being characterized by at least one angle.

According to still further features in the described preferred embodiments each of the at least one reference field is selected from a group consisting of a gravitational field, a magnetic field, a velocity field and an acceleration field.

According to still further features in the described preferred embodiments the arrangement of sensors comprises a plurality of sensors engaging a single plane in a substantially different orientation.

According to still further features in the described preferred embodiments the arrangement of sensors comprises a first sensors and a second sensor engaging a single plane in a substantially different orientation.

According to still further features in the described preferred embodiments the arrangement of sensors comprises gravity detectors.

According to still further features in the described preferred embodiments the gravity detectors are inclinometers.

According to still further features in the described preferred embodiments the inclinometers comprises liquid.

According to still further features in the described preferred embodiments each of the inclinometers is independently selected from the group consisting of a capacitance-based inclinometer and a resistance-based inclinometer.

According to still further features in the described preferred embodiments the gravity detectors are mercury-switches.

According to still further features in the described preferred embodiments the arrangement of sensors comprises at least one accelerometer.

According to still further features in the described preferred embodiments the image capture apparatus comprises a processor operable to select a capture mode of an image.

According to still further features in the described preferred embodiments the method further comprises providing a second communication channel between the control unit and the processor.

According to still further features in the described preferred embodiments the capture mode is selected from the group consisting of a fixed orientation, a fixed rotation and an automatic orientation.

According to still further features in the described preferred embodiments each of the fixed rotation and the automatic orientation is independently characterized by an orientation-angle.

According to still further features in the described preferred embodiments the an orientation-angle is selected from the group consisting of 90 degrees, 180 degrees and 270 degrees.

According to an additional aspect of the present invention there is provided an image associated with orientation information characterizing an orientation of an image capture apparatus at a time of capture of the image, the image and the orientation information being stored in a retrievable format, on memory media, the orientation information being arranged to instruct a display utility to display the image in accordance with an indicated orientation.

According to still an additional aspect of the present invention there is provided memory media, storing in a retrievable and displayable format an image, and associated orientation information, the orientation information characterizing an orientation of an image capture apparatus at a time of capture of the image.

The present invention successfully addresses the shortcomings of the presently known configurations by providing an image capture apparatus and a method of and a device for determining an orientation thereof.

### Brief Description of the Drawings

For a better understanding of the invention and to show how the same may be carried into effect, reference will now be made, purely by way of example, to the accompanying drawings.

With specific reference now to the drawings in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice. In the accompanying drawings:
Fig. 1 is a simplified illustration of a device for determining an orientation of an image capture apparatus, according to a preferred embodiment of the present invention.
Figs. 2a-d are simplified illustrations exemplifying four different orientations of the image capture apparatus, according to a preferred embodiment of the present invention.
Fig. 3 is a simplified flowchart of a method of determining an orientation of an image capture apparatus, operable to capture at least one image, according to a preferred embodiment of the present invention.
Fig. 4 is a simplified illustration of an image associated with orientation information, where both the image and the orientation information are stored in memory media, according to a preferred embodiment of the present invention.
Fig. 5 is a simplified illustration of memory media, storing a plurality of images, each associated with respective orientation information, according to a preferred embodiment of the present invention.
Fig. 6 is a simplified flowchart of a method of manufacturing a device for determining an orientation of an image capture apparatus operable to capture at least one image, according to a preferred embodiment of the present invention.

### Description of the Preferred Embodiments

The present embodiments relate to a device and a method of determining and recording an orientation of an image capture apparatus at the time of capture of an image, which can be used for obtaining a correct orientation for display of the captured image. More specifically, the present embodiments can be used for rotating an image as provided by an image capture apparatus such as, but not limited to, a digital camera, a video camera, a digital video camera, a camera having a digital camera back and the like. The embodiments further relate to an image capture apparatus incorporating the device.

The principles and operation of a device and a method of determining an orientation of an image capture apparatus according to the teachings of the present invention may be better understood with reference to the drawings and accompanying descriptions.

Before explaining at least one embodiment of the invention in detail, it is to be understood that the invention is not limited in its application to the details of construction and the arrangement of the components set forth in the following description or illustrated in the drawings. The invention is applicable to other embodiments or of being practiced or carried out in various ways. Also, it is to be understood that the phraseology and terminology employed herein is for the purpose of description and should not be regarded as limiting.

According to one aspect of the invention there is provided a device, generally referred to herein as device **10**, for determining an orientation of an image capture apparatus.

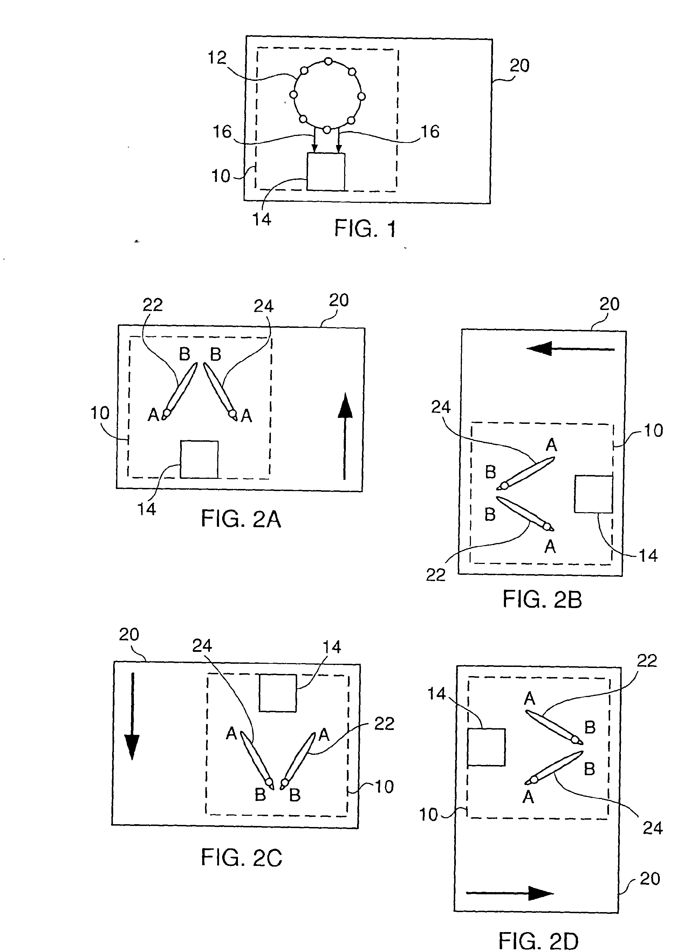

Referring now to the drawings, Fig. 1 is a simplified illustration of device **10** and an image capture apparatus **20**. Device **10** comprising a arrangement of sensors **12** and a control unit **14,** communicating with arrangement of sensors **12** via a communication channel **16.** Any known communication channel may be used between control unit **14** and arrangement of sensors **12**, *e.g*., wired communication or wireless communication. Communication channel **16** is shown in Fig. 1 as two arrows pointing from arrangement of sensors **12** to control unit **14**. Arrangement of sensors **12** is designed and configured so that electrical signals characterizing a particular orientation of image capture apparatus **20** are transmitted from arrangement of sensors **12** to control unit **14**, via communication channel **16**, thereby determining the orientation of image capture apparatus **20**.

According to a preferred embodiment of the present invention, arrangement of sensors **12** is operable to sense a direction of at least one reference field relative to image capture apparatus **20** in a respective orientation of image capture apparatus **20.** Specifically, via communication channel **16,** arrangement of sensors **12** transfers directional information of the reference field to control unit **14.** The reference field may be any field to which arrangement of sensors **12** is sensitive, *e.g*., a gravitational field, a magnetic field, a velocity field, an acceleration field and the like. Examples of sensors capable of providing directional information based on a reference field are given hereinunder.

Preferably, the directional information provided by arrangement of sensors **12** comprises at least one angle characterizing the direction of image capture apparatus **20**. The angles may be realized using any mathematical convention, such as, but not limited to, the Euler angles. The preferred number of angles which arrangement of sensors **12** senses and transfers to control unit **14**, depends on the specific application for which image capture apparatus **20** is designed.

Hence, in one embodiment, arrangement of sensors **12** is designed to sense a single angle and to be insensitive to other angles. One of ordinarily skill in the art would appreciate that a single angle provides directional information for a rotation of a body about a single fixed axis, *e.g.*, rotation of a planar object. This embodiment is preferred in many applications of image capture apparatus **20**, for example, when image capture apparatus **20** is a camera it is often desired to determine the angle of the camera only about an axis defined through its lens. In some of these cases, it is also desired that the axis of rotation will be substantially parallel to the ground, so that the orientation is determined relative to the eyes of a standing observer.

In another embodiment arrangement of sensors **12** is designed to sense two angles, for example the so-called "roll-angle" and the so-called "pitch-angle". This embodiment can be used when two-angle information of image capture apparatus **20** is important. For example, this information can be used when the image as provided by image capture apparatus **20** is to be used for the purpose of animation, where both the inclination of image capture apparatus **20** above the scene and its rolling about an axis defined through its lens are important.

In an additional embodiment, arrangement of sensors **12** is designed to sense three angles, for example a "roll-angle" a "pitch-angle" and the so-called "yaw-angle". This embodiment can be used when full information of image capture apparatus **20** orientation is important, for example when the image is associated with a geographical map.

In any case, arrangement of sensors **12** is configured and designed such that a particular orientation of image capture apparatus **20** corresponds to a different state of arrangement of sensors **12** thereby to a different electrical signal which is transferred to control unit **14**. It would be appreciated that the combinatorial factor which corresponds to the number of different states of arrangement of sensors **12** should be such that each unique orientation of image capture apparatus **20** is uniquely paired to a unique state of arrangement of sensors **12.**

For the purpose of a better understanding of arrangement of sensors **12** and its various states, the preferred embodiment of a single angle orientation is herein provided with reference to Figs. 2a-d. However, it should be understood that the following is not intended to be limiting, as image capture apparatus **20** may have other orientations, which, as further detailed hereinabove, can be determined by device **10**.

Hence, Figs. 2a-d exemplify four different orientations of image capture apparatus **20,** according to a preferred embodiment of the present invention. Each of the orientations is designated by an arrow in Fig. 2, the direction of which being anti-parallel to the direction of the reference field. As can be seen, each of the orientations can be uniquely characterized by a single angle. Commonly used phrases in the art for the four different orientations shown in Fig. 2 are "landscape-orientation" (Fig. 2a), "portrait-orientation" (Fig. 2b), "seascape-orientation" (Fig. 2c) and "upside-down-orientation" (Fig. 2d). One would appreciate that these phrases are for the purpose of illustrative description and are not intended to be limiting.

According to the presently preferred embodiment of the invention arrangement of sensors **12** comprises a first sensor **22** and a second sensor **24**, engaging a single plane in a substantially different orientation. First sensor **22** and second sensor **24** are represented in Fig. 2 by elongated objects the edges of which being designated by the letters "A" and "B". A direction of a component of the reference field is emphasized in Fig. 2 by a dark spots near a respective edge of each of first **22** and second **24** sensors, as further detailed herein.

Hence, Fig. 2a represents a possible orientation in which for both first **22** and second **24** sensors a component of the reference field is substantially directed from edge "B" to edge "A". The unique state of arrangement of sensors **12** which characterizes this orientation is referred to hereinafter as the "A-A" state.

Fig. 2b represents a possible orientation in which for first sensor **22** a component of the reference field is substantially directed from edge "B" to edge "A", while for second sensor **24** a component of the reference field is substantially directed from edge "A" to edge "B". The unique state of arrangement of sensors **12** which characterizes this orientation is referred to hereinafter as the "A-B" state. One would appreciate that the "A-B" state is a 90 degrees rotation anti-clockwise of the "A-A" state.

Fig. 2c represents a possible orientation in which for both first **22** and second **24** sensors a component of the reference field is substantially directed from edge "A" to edge "B". The unique state of arrangement of sensors **12** which characterizes this orientation is referred to hereinafter as the "B-B" state, and it is a 180 degrees rotation anti-clockwise of the "A-A" state.

Fig. 2d represents a possible orientation in which for first sensor **22** a component of the reference field is substantially directed from edge "A" to edge "B", while for second sensor **24** a component of the reference field is substantially directed from edge "B" to edge "A". The unique state of arrangement of sensors **12** which characterizes this orientation is referred to hereinafter as the "B-A" state, and it is a 270 degrees rotation anti-clockwise of the "A-A" state.

Thus, each of the four orientation exemplified in Fig. 2, is uniquely characterized by the state of arrangement of sensors **12** which is the relative orientation of each of first sensor **22** and second sensor **24** with respect to the reference field. Thus, the respective state of arrangement of sensors 12 is transferred to control unit **14** in the form of electrical signals. Based on the electrical signals from arrangement of sensors **12**, control unit **14** determines the orientation of image capture apparatus **20**. A skilled artisan would appreciate that the above principles can be employed also for more than four orientations by using more sensors which are appropriately oriented. For rotations about a single axis (*e.g*., planar rotations in the plane of Fig. 2), the number of differently oriented sensors is selected so that the number of different states of arrangement of sensors **12** matches the number of different planar rotations. For multi-axis rotations, one defines, for each axis, a plane perpendicular to the respective axis and orientations with respect to each axis can be detected by positioning sensors in the respective plane, whereby the sensors are oriented in a similar way to the orientation of first sensor **22** and second sensor **24.**

According to a preferred embodiment of the present invention, each sensor of arrangement of sensors **12** may be any sensor known in the art for providing orientation (directional and/or inclinational) information. Many such sensors known in the art.

One type of sensor which can be used is a gravity detector, which is sensitive to a gravitational field and thereby to a tilt of an object with respect to a vertical plane.

The gravity detector may be, for example, a mercury switch. A typical mercury switch comprises a tube having an open circuit at each end thereof, and a small ball of mercury that can move freely from one end to the other. When the mercury ball falls on one end of the tube, the respective circuit is closed. The motion of the mercury ball is controlled by a gravitational force hence the mercury switch serves as a gravity detector.

The gravity detector may also be an inclinometer which is based on the properties of fluids, as further explained hereinbelow. According to a preferred embodiment of the present invention the inclinometer may be a capacitance-based inclinometer, a resistance-based inclinometer or any other inclinometer known to those skilled in the art. In a typical resistance-based inclinometer, the tilt indication occurs through the use of gravity-type potentiometers. Electrical conductors are placed in a conical or circular tube containing electrical-conducting fluid to a predetermined level. Two equal length segments of electrical conductor extend from the electrical-conducting fluid so that when the device is level, equal segments of the wire are submerged in the electrical-conducting fluid. When the tube is tilted from a horizontal reference, unequal length segments of electrical conductor are created within the electrical-conducting fluid. The variance in resistance between the wires is used to determine the tilt.

In a capacitance-based inclinometer, a tilt is determined by variations in capacitance which are proportional to the rate of tilt. In one type of capacitance-based inclinometer, the variations in capacitance are caused by variations in the displacement of fluid partially filling a sealed cavity. The fluid in a capacitance-based inclinometer typically has a dielectric constant which is greater than that of the dielectric constant of the atmosphere of the cavity not occupied by fluid. Having a different dielectric constant, the fluid allows the variance of capacitance between sections of electrical conductors in the sensor. In a number of capacitance-based inclinometers, a circular plate is divided into a number of sections each having an electrode. As the position of the fluid varies covering different sections, the capacitance between each section varies. By measuring the differences in the section-to-section capacitance, the amount of tilt of an object can be determined. Other capacitance-based inclinometers employ two plates between which is established a capacitance by either a dielectric fluid (or an electrolytic fluid if the electrical conductors on the plate are covered by a dielectric coating). By determining the capacitance between the parallel plates, in accordance with the variance in fluid position due to the tilt of the inclinometer, a measurement of the horizontal tilt of the inclinometer is determined.

Another type of sensor which can be used in arrangement of sensors **12** is an accelerometer, sensitive to an acceleration field and operable to measure the force exerted on it in a particular direction. Accelerometers and techniques used to indicate forces and tilts are discussed, *e.g.,* in U.S. Pat. Nos. 5,679,895 and 6,417,666 and in an article by M. Andrews *et al*. entitled "A Comparison of Squeeze-Film Theory with Measurements on a Microstructure", published in *Sensors and Actuators,* A 36 (1993) pages 79-87, the contents of which are herby incorporated by reference.

One ordinarily skilled in the art would appreciate that in a case in which image capture apparatus **20** is static, the force exerting on the accelerometer is a gravitational force. The intensity of the electrical signals generated by the accelerometers can be used to identify the orientation of image capture apparatus **20** as further exemplified herein.

Referring again to Figs. 2a-d, according to a preferred embodiment of the present invention, both first **22** and second **24** sensors may be accelerometers configured to measure a force, for example, in the direction from edge "B" to edge "A". In this embodiment, a "landscape-orientation" (Fig. 2a) is identified when both sensors generate moderate signals; a "portrait-orientation" (Fig. 2b) is identified when first sensor **22** generate a moderate signal while second sensor **24** generate a low signal; a "seascape-orientation" (Fig. 2c) is identified when both sensors generate low signals; and an "upside-down-orientation" (Fig. 2d) is identified when first sensor **22** generate a low signal while second sensor **24** generate a moderate signal.

Thus, arrangement of sensors **12** may be configured using numerous alternatives, each of which allows device **10** to determine the orientation of image capture apparatus **20.** The present embodiments provide image capture apparatus having device **10** embedded therein.

According to a further embodiment of the present invention there is provided an image capture apparatus having a device for determining an orientation of the image capture apparatus. The components, principles and operation modes of the device are similar to the components, principles and operation modes of device **10** as further detailed hereinabove, with references to Fig. 1.

Once the orientation of the image capture apparatus has been determined by device **10**, the information is preferably transferred from control unit**14** to the image capture apparatus. Preferably, the image capture apparatus further comprises a processor which is operable to select a capture mode of the image, according to which the orientation of the image is selected. The capture mode may be employed at any level of image processing. For example, the capture mode can be employed on the level of high resolution image processing or on the level of a display (*e.g.*, a display which is embedded in the image capture apparatus or a display of an external device to which the image is uploaded). Alternatively, the capture mode may be stored in a memory for future use.

The selected capture mode can be either based on user's input or on information received from device **10** (via control unit **14**). Hence, in one embodiment, the capture mode is a fixed orientation of the image, where a predetermined orientation of the image is used, irrespectively of the orientation detected by device **10**. In another embodiment, the capture mode is a fixed rotation where the image is rotated by a fixed orientation-angle (*e.g.*, 90, 180, 270 degrees and the like). In an additional embodiment, the capture mode is an automatic orientation, where the orientation-angle of the image is taken from information received from device **10.**

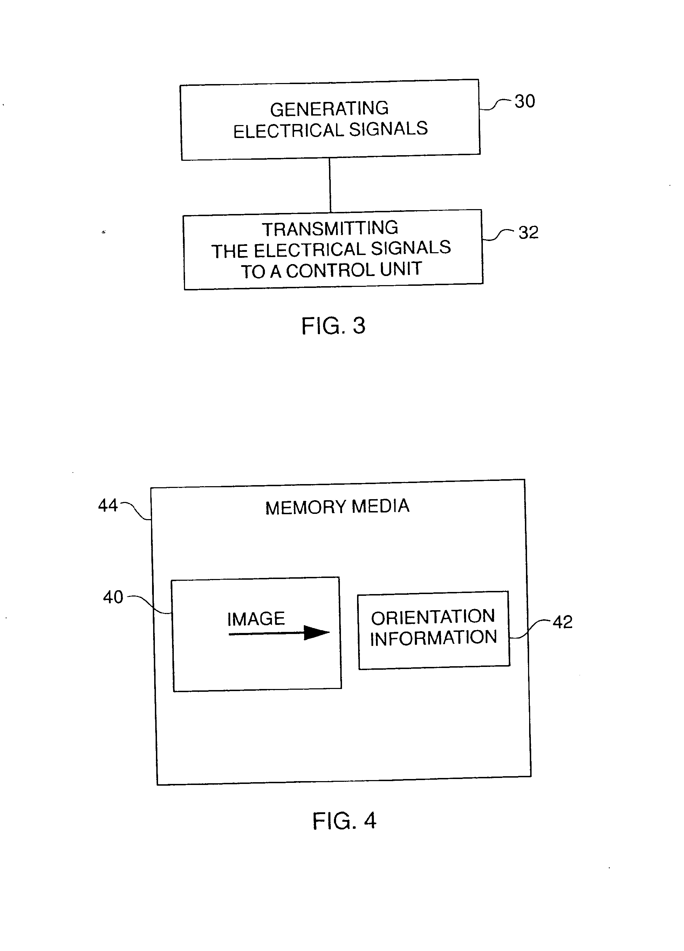

According to still further embodiment of the present invention there is provided a method of determining an orientation of an image capture apparatus, operable to capture at least one image. The method comprises the following method steps, which are illustrated in a simplified flowchart shown in Figure 3.

Referring to Figure 3, in a first step, represented by block **30,** electrical signals, characterizing a particular orientation of the image capture apparatus at a time of image capture, are generated. The electrical signals may be generated using any known method, and using any known device, provided that the electrical signals uniquely characterize the particular orientation of the image capture apparatus at a time of image capture. Thus, for example, the electrical signal can be generated using arrangement of sensors **12** of device **10**, as detailed hereinabove. In a second step, represented in Figure 3 by block **32**, the electrical signals are transmitted to a control unit, thereby providing an indication of the orientation of the image capture apparatus at the time of image capture. The principles and operation modes of the control unit are similar to the principles and operation modes of control unit **14**, described above.

According to a still further embodiment of the present invention there is provided an image associated with orientation information characterizing an orientation of an image capture apparatus at a time of capture of the image. Preferably, both the image and the orientation information are stored in appropriate memory media, in a retrievable format for future use, *e.g.*, by a display utility.

Reference is now made to Figure 4, which is a simplified illustration of an image **40** associated with orientation information **42**, where both image **40** and orientation information **42** are stored in memory media **44**.

Hence, according to a still further embodiment of the present invention there is provided memory media, storing in a retrievable and displayable format the image and the associated orientation information. The stored orientation information characterizes an orientation of an image capture apparatus at a time of capture of the image.

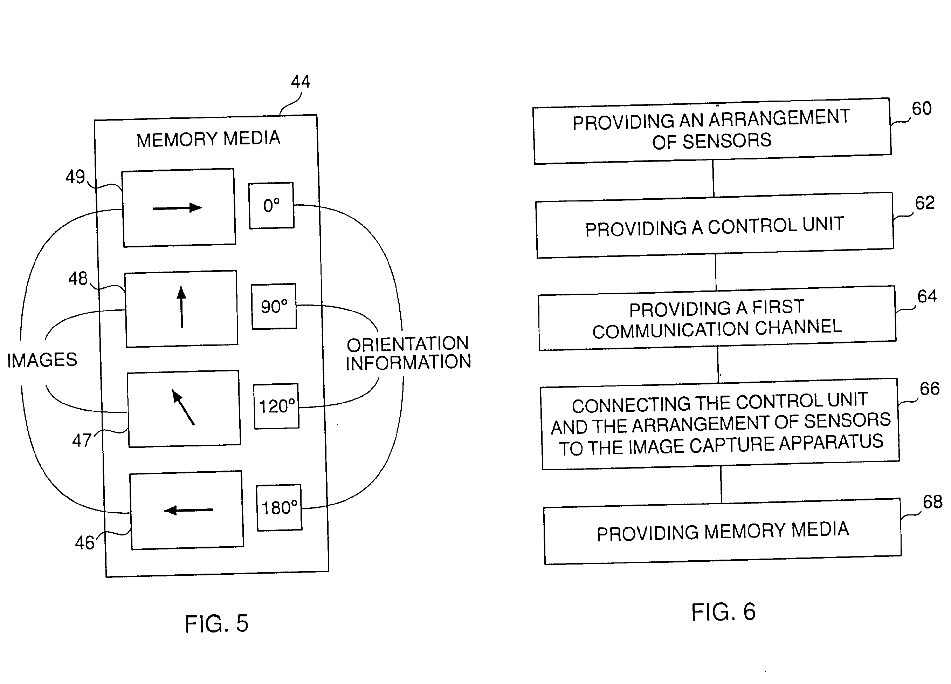

Reference is now made to Figure 5, which is a simplified illustration of memory media **44**, storing a plurality of images **46, 47, 48** and **49**, each associated with respective orientation information, which is expressed through an angle. The orientation information of each image may be realized by any known form, such, as but not limited to, a single angle (as exemplified in Figure 5), a plurality of angles, a predetermined code (*e.g*., "landscape", "portrait", *etc*.) and the like.

According to a preferred embodiment of the present invention the memory media can be any memory media known to those skilled in the art, which is capable of storing the image and the associated orientation information therein. Preferably, but not exclusively, the memory media is removable so as to allow plugging the memory media into a host *(e.g.,* a processing system), thereby allowing the host to store the image and the associated orientation information in it or to retrieve upon request the image and the associated orientation information from it.

Examples for memory media which may be used include, but are not limited to, disk drives (*e.g.*, magnetic, optical or semiconductor), CD-ROMs, floppy disks, flash cards, compact flash cards, miniature cards, solid state floppy disk cards, battery-backed SRAM cards and the like.

It is appreciated that in all the above embodiments, the images and the orientation information are stored in the memory media in an appropriate retrieveable format. Specifically, the images are preferrably stored in a displayable format and the orientation information are stored in any format which can be retrieved so as to allow the orientation information to instruct the display utility to display the image in accordance with an indicated orientation. Many formats are presently known, for example, BITMAP™, TIFF™, DIB™, PALETTE™, PDF™, DVI™ and the like. However it is to be understood that any other format that is presently known or will be developed during the life time of this patent, is within the scope of the present invention.

According to still further embodiment of the present invention there is provided a method of manufacturing a device for determining an orientation of an image capture apparatus operable to capture at least one image. The method comprising the following method steps, which are illustrated in a simplified flowchart shown in Figure 6.

Referring to Figure 6, a first step, represented by block **60**, comprises providing an arrangement of sensors, which are capable of determining orientation. The arrangement of sensors may be, for example, arrangement of sensors **12.** A second step, represented by block **62**, comprises providing a control unit, such as, but not limited to, control unit **14**, which is capable of determining an orientation of the image capture apparatus, based on electrical signals transmitted from the arrangement of sensors. In a third step of the method, represented by block **64**, a first communication channel is provided for the purpose of communication between the arrangement of sensors and the control unit. In a fourth step, represented in Figure 6 by block **66**, the control unit and the arrangement of sensors are connected to the image capture apparatus. The fourth step is executed so as to ensure that at a time of image capture the electrical signals are transmitted to the control unit, for association with the captured image.

According to a preferred embodiment of the present invention, the method further comprising a fifth step, represented in Figure 6 by block **68,** in which memory media are provided. The memory media preferably capable of storing the image and the orientation in a retrievable format as further detailed hereinabove.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable subcombination.

Unless otherwise defined, all technical and scientific terms used herein have the same meanings as are commonly understood by one of ordinary skill in the art to which this invention belongs. Although methods similar or equivalent to those described herein can be used in the practice or testing of the present invention, suitable methods are described herein.

All publications, patent applications, patents, and other references mentioned herein are incorporated by reference in their entirety. In case of conflict, the patent specification, including definitions, will prevail. In addition, the materials, methods, and examples are illustrative only and not intended to be limiting.

It will be appreciated by persons skilled in the art that the present invention is not limited to what has been particularly shown and described hereinabove. Rather the scope of the present invention is defined by the appended claims and includes both combinations and subcombinations of the various features described hereinabove as well as variations and modifications thereof which would occur to persons skilled in the art upon reading the foregoing description.

## Claims

1. A device for determining an orientation of an image capture apparatus operable to capture at least one image, the device comprising an arrangement of sensors and a control unit communicating with said arrangement of sensors, said arrangement of sensors being designed and configured to generate electrical signals **characterizing** a particular orientation of the image capture apparatus, at a time of image capture, and to transmit said signals from said arrangement of sensors to said control unit, thereby providing an indication of the orientation of the image capture apparatus at said time of image capture.

2. The device of claim 1, further comprising memory media for storing an image and said orientation in a retrievable and displayable format, thereby to provide a recorded image and a recorded orientation information, said recorded orientation information being associated with said recorded image.

3. The device of claim 1 or claim 2, wherein the image capture apparatus is selected from a group consisting of a digital camera, a video camera, a digital video camera and a camera having a digital camera back.

4. The device of claim 1, 2 or 3, wherein said arrangement of sensors is parameterized by a plurality of predetermined and different states, each state of said plurality of states represents one orientation of the image capture apparatus.

5. The device of any preceding claim, wherein said arrangement of sensors is operable to sense a direction of at least one reference field relative to the image capture apparatus in a respective orientation of the image capture apparatus, said direction being **characterized by** at least one angle.

6. The device of claim 5, wherein each of said at least one reference field is selected from a group consisting of a gravitational field, a magnetic field, a velocity field and an acceleration field.

7. The device of any preceding claim, wherein said arrangement of sensors is operable to sense a direction of at least one reference field relative to the image capture apparatus in a respective orientation of the image capture apparatus, said direction being **characterized by** a single angle.

8. The device of claim 7, wherein each of said at least one reference field is selected from a group consisting of a gravitational field, a magnetic field, a velocity field and an acceleration field.

9. The device of any preceding claim, wherein said arrangement of sensors comprises a plurality of sensors engaging a single plane in a substantially different orientation.

10. The device of any of claims 1 to 8, wherein said arrangement of sensors comprises a first sensor and a second sensor, engaging a single plane in a substantially different orientation.

11. The device of any preceding claim, wherein said arrangement of sensors comprises gravity detectors.

12. The device of any preceding claim, wherein said arrangement of sensors comprises at least one accelerometer.

13. The device of any preceding claim, wherein said control unit communicates with the image capture apparatus.

14. An image capture apparatus operable to capture at least one image, and having a device for determining an orientation of the image capture apparatus, the device comprising an arrangement of sensors and a control unit communicating with said arrangement of sensors, said arrangement of sensors being designed and configured to generate electrical signals **characterizing** a particular orientation of the image capture apparatus, at a time of image capture, and to transmit said signals from said arrangement of sensors to said control unit, thereby providing an indication of the orientation of the image capture apparatus at said time of image capture.

15. The image capture apparatus of claim 14, further comprising memory media for storing an image and said orientation in a retrievable and displayable format, thereby to provide a recorded image and a recorded orientation information, said recorded orientation information being associated with said recorded image.

16. The image capture apparatus of claim 14, or claim 15, which is selected from a group consisting of a digital camera, a video camera, a digital video camera and a camera having a digital camera back.

17. The image capture apparatus of claim 14, 15 or 16, wherein said arrangement of sensors is parameterized by a plurality of predetermined and different states, each state of said plurality of states represents one orientation of the image capture apparatus.

18. The image capture apparatus of any one of claims 14 to 17, wherein said arrangement of sensors is operable to sense a direction of at least one reference field relative to the image capture apparatus in a respective orientation of the image capture apparatus, said direction being **characterized by** at least one angle.

19. The image capture apparatus of claim 18, wherein each of said at least one reference field is selected from a group consisting of a gravitational field, a magnetic field, a velocity field and an acceleration field.

20. The image capture apparatus of any of claims 14 to 19, wherein said arrangement of sensors is operable to sense a direction of at least one reference field relative to the image capture apparatus in a respective orientation of the image capture apparatus, said direction being **characterized by** a single angle.

21. The image capture apparatus of claim 20, wherein each of said at least one reference field is selected from a group consisting of a gravitational field, a magnetic field, a velocity field and an acceleration field.

22. The image capture apparatus of any of claims 14 to 21, wherein said arrangement of sensors comprises a plurality of sensors engaging a single plane in a substantially different orientation.

23. The image capture apparatus of any of claims 14 to 22, wherein said arrangement of sensors comprises a first sensor and a second sensor, engaging a single plane in a substantially different orientation.

24. The image capture apparatus of any of claims 14 to 23, wherein said arrangement of sensors comprises gravity detectors.

25. The image capture apparatus of any of claims 14 to 24, wherein said arrangement of sensors comprises at least one accelerometer.

26. The image capture apparatus of any of claims 14 to 25, further comprising a processor operable to select a capture mode of an image.

27. The image capture apparatus of claim 26, wherein said control unit communicates with said processor.

28. The image capture apparatus of claim 26, wherein said capture mode is selected from the group consisting of a fixed orientation, a fixed rotation and an automatic orientation.

29. The image capture apparatus of claim 28, wherein each of said fixed rotation and said automatic orientation is independently **characterized by** an orientation-angle.

30. The image capture apparatus of claim 26, further comprising a display.

31. The image capture apparatus of claim 30, wherein said processor is operable to project the image on said display in accordance with said capture mode.

32. The image capture apparatus of claim 30, further comprising a memory for storing said capture mode.

33. A method of determining an orientation of an image capture apparatus operable to capture at least one image, the method comprising generating electrical signals **characterizing** a particular orientation of the image capture apparatus, at a time of image capture, and transmitting said electrical signals to a control unit, thereby providing an indication of the orientation of the image capture apparatus at said time of image capture.

34. The method of claim 33, wherein said generating said electrical signals is by an arrangement of sensors.

35. The method of claim 33 or claim 34, further comprising storing an image and said orientation in a retrievable and displayable format, thereby providing a recorded image and a recorded orientation information, said recorded orientation information being associated with said recorded image.

36. The method of claim 33, 34, or 35, wherein the image capture apparatus is selected from a group consisting of a digital camera, a video camera, a digital video camera and a camera having a digital camera back.

37. The method of any of claims 34 to 36, further comprising parameterizing said arrangement of sensors by a plurality of predetermined and different states, each state of said plurality of states represents one orientation of the image capture apparatus.

38. The method of any of claims 34 to 37, wherein said arrangement of sensors is operable to sense a direction of at least one reference field relative to the image capture apparatus in a respective orientation of the image capture apparatus, said direction being **characterized by** at least one angle.

39. The method of claim 38, wherein each of said at least one reference field is selected from a group consisting of a gravitational field, a magnetic field, a velocity field and an acceleration field.

40. The method of any of claims 34 to 39, wherein said arrangement of sensors is operable to sense a direction of at least one reference field relative to the image capture apparatus in a respective orientation of the image capture apparatus, said direction being **characterized by** a single angle.

41. The method of claim 40, wherein each of said at least one reference field is selected from a group consisting of a gravitational field, a magnetic field, a velocity field and an acceleration field.

42. The method of any of claims 34 to 41, wherein said arrangement of sensors comprises a plurality of sensors engaging a single plane in a substantially different orientation.

43. The method of any of claims 34 to 42, wherein said arrangement of sensors comprises a first sensor and a second sensor, engaging a single plane in a substantially different orientation.

44. The method of any of claims 34 to 43, wherein said arrangement of sensors comprises gravity detectors.

45. The method of any of claims 34 to 44, wherein said arrangement of sensors comprises at least one accelerometer.

46. The method of any of claims 33 to 45, further comprising selecting a capture mode of an image.

47. The method of claim 46, wherein said capture mode is selected from the group consisting of a fixed orientation, a fixed rotation and an automatic orientation.

48. The method of claim 47, wherein each of said fixed rotation and said automatic orientation is independently **characterized by** an orientation-angle.

49. The method of claim 46, further comprising projecting said image on a display in accordance with said capture mode.

50. The method of claim 46, further comprising storing said capture mode in a memory.

51. An image associated with orientation information **characterizing** an orientation of an image capture apparatus at a time of capture of said image, the image and the orientation information being stored in a retrievable format, on memory media, said orientation information being arranged to instruct a display utility to display said image in accordance with an indicated orientation.

52. Memory media, storing in a retrievable and displayable format an image, and associated orientation information, said orientation information **characterizing** an orientation of an image capture apparatus at a time of capture of said image.
